# FASCICULE DE BREVET EUROPEEN

(11) **EP 2 616 790 B1**
(45) Date de publication et mention de la délivrance du brevet: **22.11.2017**
(21) Numéro de dépôt: 11773072.1
(22) Date de dépôt: 13.09.2011
(51) Int. Cl.: G01M 3/02

(54) **DISPOSITIF POUR REALISER DES TESTS SUR AU MOINS UN RESEAU FLUIDIQUE D'UN AERONEF**
VORRICHTUNG ZUM TESTEN VON MINDESTENS EINER FLUIDSCHALTUNG EINES FLUGZEUGS
DEVICE FOR CARRYING OUT TESTS ON AT LEAST ONE FLUID CIRCUIT OF AN AIRCRAFT

(30) Priorité: 17.09.2010 FR 1057465
(43) Date de publication de la demande: 24.07.2013
(73) Titulaire: Airbus Operations SAS, 31060 Toulouse (FR)
(72) Inventeur: MATEO, Stéphane, F-82170 Dieupentale (FR); COURTHIEU, Bernard, F-31190 Auterive (FR); ZIMMERMANN, Ludovic, F-31270 Frouzins (FR)
(74) Mandataire: Fantin, Laurent
(86) Numéro de dépôt international: PCT/FR2011/052088
(87) Numéro de publication internationale: WO 2012/035251

(56) Documents cités:
- EP-A2- 1 300 666
- US-A- 2 332 725
- US-A- 2 364 709
- US-A- 2 509 816
- US-A- 5 540 083
- US-B1- 7 331 244

## Description

La présente invention se rapporte à un dispositif pour réaliser des tests ou des essais sur au moins un réseau fluidique d'un aéronef.

Pour la suite de la description, on entend par un réseau fluidique au moins une portion de conduit et/ou un réservoir dans lequel circule et/ou est stocké un fluide à savoir un liquide ou un gaz. A titre d'exemple, le réservoir de carburant d'un aéronef peut être assimilé à un réseau fluidique selon l'invention.

Lors de l'assemblage ou en fin d'assemblage d'un aéronef ou lors de son exploitation, il est nécessaire de tester certains réseaux fluidiques afin de vérifier leurs états, notamment leur étanchéité.

Pour ce faire, le réseau fluidique subit un cycle de pression.

Pour la suite de la description, on entend par pression aussi bien une pression supérieure à la pression atmosphérique qu'une pression inférieure. Par cycle, on entend aussi bien une pression constante qu'une pression qui varie en fonction du temps. Ainsi, le réseau fluidique peut être soumis à une pression sensiblement constante pendant une certaine durée ou peut subir une pression qui varie, par exemple qui augmente jusqu'à un certain pallier, qui reste constante pendant un certain temps puis qui diminue.

Pour pouvoir le tester, un réseau fluidique comprend des moyens de raccordement, par exemple un système de connexion rapide.

En fonction du type d'aéronef, du réseau fluidique et du test à réaliser, l'opérateur utilise un outillage approprié pour relier une source de fluide aux moyens de raccordement. En fonction du test, la source de fluide peut varier. A titre d'exemple, la source de fluide peut être un réseau d'air comprimé ou une bouteille contenant un gaz sous pression (azote, hélium, ...). L'outillage comprend un conduit avec à une extrémité des moyens de raccordement au réseau fluidique à tester et à l'autre extrémité des moyens de raccordement à une source de fluide, un détendeur pour ajuster la pression ou la faire évoluer en fonction du test à réaliser ainsi qu'un manomètre pour contrôler la pression. Cet outillage est généralement stocké dans une valise des exemples de dispositif de test sont décrits par les documents US2332725 et US2364709. En raison des conditions de test et notamment de la présence de gaz sous pression, cet outillage fait l'objet d'une certification.

Selon un autre aspect, du fait notamment des pressions qui sont différentes d'un test à l'autre, il est nécessaire de prévoir un outillage adapté au test.

Selon un autre point, il est nécessaire de prévoir pour chaque type d'avions, une série de valises, chacune dédiée à un test.

Cette gestion n'est pas pleinement satisfaisante. En effet, compte tenu du nombre de types d'avions, du nombre de réseaux fluidiques à tester sur chaque type d'avion, il est nécessaire de prévoir un grand nombre de valises, ce qui induit des coûts importants en matière de certification, de fabrication et d'immobilisation. Par ailleurs, il est nécessaire de prévoir une zone de stockage importante pour tous ces outillages.

Cette diversité d'outillages est encore plus problématique lors des phases d'entretien et de dépannage car il est alors nécessaire de déplacer un grand nombre d'outillages ou d'en limiter le nombre en prenant le risque de ne pas avoir le bon sur le lieu du dépannage.

Aussi, la présente invention vise à pallier les inconvénients de l'art antérieur en proposant un dispositif polyvalent pour réaliser différents tests sur différents réseaux fluidiques de différents aéronefs.

A cet effet, l'invention a pour objet un dispositif pour réaliser un test sur un réseau fluidique d'un aéronef conformément à la revendication 1. D'autres caractéristiques et avantages ressortiront de la description qui va suivre de l'invention, description donnée à titre d'exemple uniquement, en regard des dessins annexés sur lesquels :
- La figure 1 est une vue en perspective du banc d'essai complet selon l'invention selon une première direction,
- La figure 2 est une vue en perspective du banc d'essai sans la valise amovible prévue pour la gestion des fluides selon une autre direction,
- La figure 3 est une vue en perspective de la valise pour la gestion des fluides seule montrant la face avant et la face gauche,
- La figure 4 est une vue en perspective illustrant la face droite de la valise illustrée sur la figure 3,
- La figure 5 est une vue de face de la valise illustrée sur la figure 3,
- La figure 6 est un schéma du réseau de fluide de la valise illustrée sur la figure 3,
- La figure 7 est une vue en perspective d'un mode de réalisation de l'essieu avant du banc d'essai,
- La figure 8 est une vue de coupe de l'essieu avant de la figure 7,
- La figure 9 est une vue en perspective d'un croisillon prévu au niveau de l'essieu avant de la figure 7,
- La figure 10 est une vue de l'arrière d'un mode de réalisation du banc d'essai, et
- La figure 11 est une vue de face d'un capot de protection de la face avant de la valise.

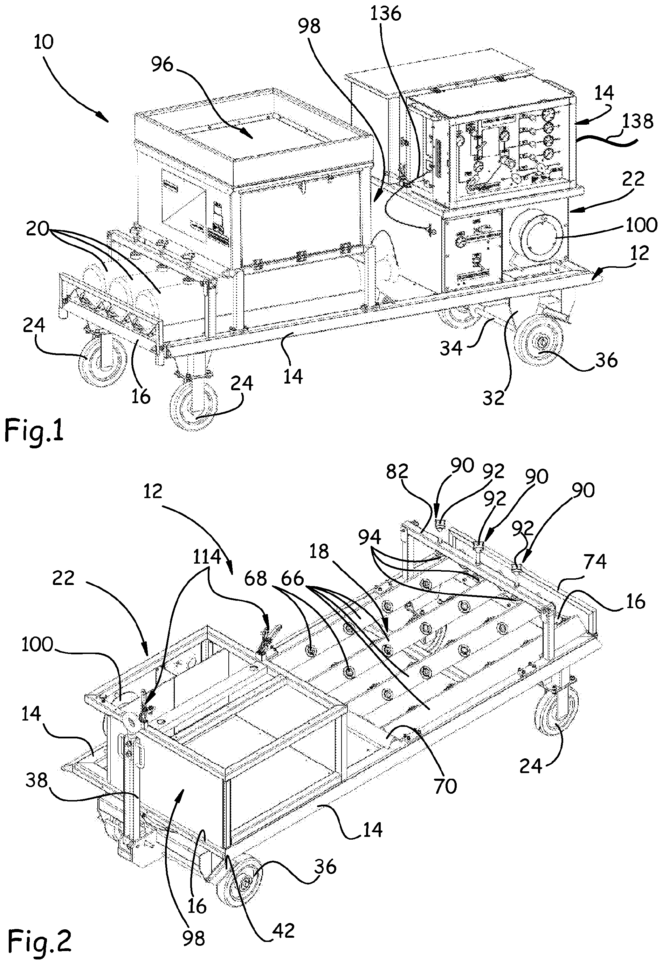

Sur les figures 1 et 2, on a représenté en 10 un banc d'essai pour réaliser des tests sur différents réseaux fluidiques de différents aéronefs. Ce banc d'essai est également appelé dispositif pour réaliser des tests sur au moins un réseau fluidique d'un aéronef.

Ce banc comprend un chariot 12 sur lequel est rapportée de manière amovible une valise 14 permettant la gestion des fluides.

Le chariot 12 comprend un châssis avec des longerons 14 et des traverses 16 de manière à définir un cadre. Le châssis comprend à l'arrière des moyens 18 pour supporter au moins un réservoir 20 d'un gaz sous pression, comme par exemple une ou des bouteilles de gaz sous pression, notamment de l'azote ou de l'hélium (les bouteilles 20 sont représentées en traits mixtes sur la figure 1) et à l'avant des moyens 22 pour supporter la valise 14.

Pour pouvoir être déplacé, le chariot 12 comprend des moyens de roulement, sous forme de deux roues arrières 24 et d'un essieu avant 26.

La liaison entre les roues arrières 24 et le chariot n'est pas plus décrite car elle est relativement simple et à la portée de l'homme du métier.

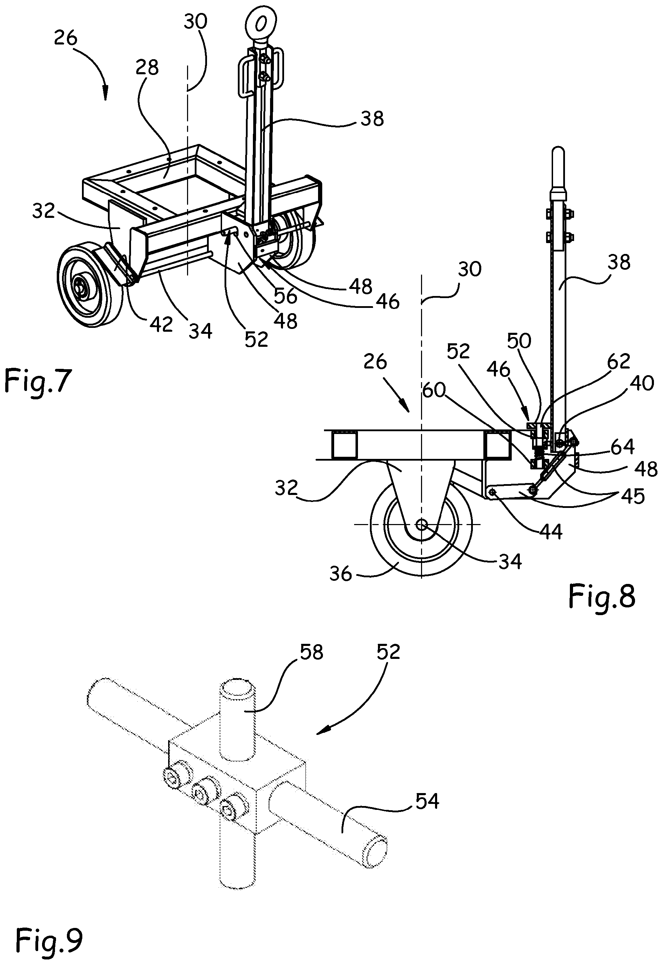

Comme illustré sur les figures 7 et 8, l'essieu avant 26 est de préférence directionnel et comprend un cadre 28 disposé sous le châssis susceptible de pivoter autour d'un axe vertical 30 par rapport au châssis, ledit cadre comportant au niveau de deux côtés opposés des joues 32 supportant un arbre 34 à chaque extrémité duquel sont montées pivotantes des roues 36 et au niveau d'un troisième côté un timon 38 permettant de tracter le banc d'essai.

Ce timon 38 est de préférence articulé par rapport au cadre 28 et peut notamment pivoter autour d'un axe 40 sensiblement parallèle à l'arbre 34 supportant les roues 36. Ce mouvement de pivotement permet de relever le timon lors du stationnement pour obtenir un gain de place. Ce mouvement de pivotement a également pour fonction d'activer ou de désactiver un système de freinage.

Avantageusement, l'essieu avant 26 comprend un système de freinage notamment des patins 42 solidarisés à chaque extrémité d'un arbre 44 parallèle à l'arbre 34, ledit arbre pouvant pivoter par rapport au cadre afin que les patins soient en contact ou non avec les roues 36.

Le pivotement de l'arbre 44 est assujetti au mouvement de pivotement du timon 38 par l'intermédiaire de biellettes 45. Ainsi, lorsque le timon 38 est relevé, les patins 42 sont en contact avec les roues 36 et le système de freinage est activé. Lorsque le timon 38 est disposé à l'horizontale, les patins 42 sont écartés des roues 36 et le système de freinage n'est pas activé.

Des moyens de verrouillage 46 permettent de maintenir le timon en position relevé et par conséquent le système de freinage activé.

Selon un mode de réalisation, le cadre 28 comprend deux plaques 48 disposées perpendiculairement aux arbres 34 et 44 entre lesquelles s'étend l'axe 40 autour duquel peut pivoter le timon 38. Ce dernier comprend une plaque 50 qui s'étend dans un plan vertical lorsque le timon 38 est baissé et dans un plan horizontal lorsque le timon est relevé. Les moyens de verrouillage 46 comprennent un croisillon 52 avec d'une part, un axe 54 dit horizontal, parallèle à l'axe de pivotement 40, se logeant dans des trous oblongs 56 ménagés dans les plaques 48 et orientés selon la verticale de manière à ce que le croisillon 52 puisse se translater verticalement, et d'autre part, un axe dit vertical 58 dont l'extrémité inférieure peut coulisser dans une portée 60 solidaire des plaques 48 de manière à guider le croisillon selon une direction verticale et dont l'autre extrémité dite supérieure peut se loger dans un logement 62 ménagé dans la plaque 50 solidaire du timon. Des moyens de rappel 64 (par exemple un ressort) permettent de maintenir le croisillon 52 en position haute.

Lorsque l'opérateur soulève le timon et que ce dernier approche de la position verticale, la plaque 50 tend à pousser le croisillon 52 vers le bas à l'encontre des moyens de rappel 64, le croisillon étant guidé par la portée 60 et les trous oblongs 56. Lorsque le timon arrive en position verticale, le logement 62 est disposé au droit de l'axe 58 du croisillon si bien que ce dernier se translate vers le haut en raison de l'action des moyens de rappel 64. L'extrémité de l'axe vertical 58 du croisillon se loge alors dans le logement 62 et maintient le timon en position relevée ce qui assure le maintien du système de freinage à l'état activé. Pour baisser le timon et désactiver le système de freinage, il convient d'exercer un effort vers le bas sur le croisillon 52 à l'encontre du ressort 64, par exemple en appuyant sur au moins une des extrémités de l'axe horizontal 54 qui s'étendent de part et d'autre des plaques 48. Dans ce cas, l'extrémité de l'axe vertical 58 du croisillon 52 ne coopère plus avec le logement 62 et libère le timon 38.

Le croisillon 52 permet une activation et une désactivation du système de freinage en toute sécurité, l'opérateur pouvant utiliser son pied pour appuyer sur les extrémités du croisillon 52 pour le manoeuvrer.

L'invention n'est pas limitée à ce mode particulier de réalisation de l'essieu avant et/ou du système de freinage. D'autres modes de réalisation pourraient être envisagés par l'homme du métier.

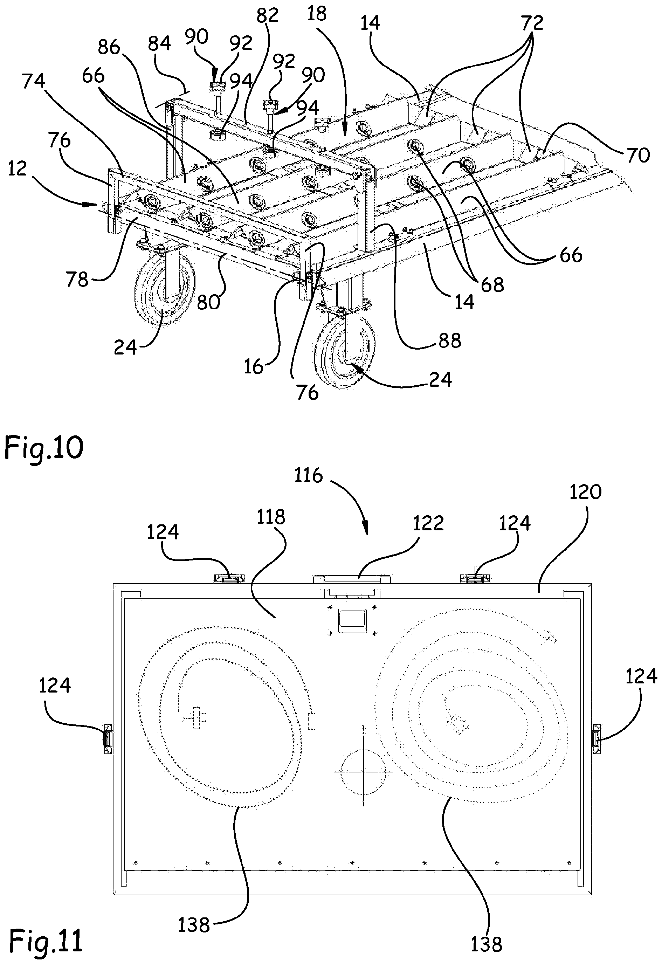

Selon un mode de réalisation illustré en détails sur les figures 2 et 10, les moyens 18 pour supporter au moins un réservoir de gaz 20 se présentent pour chaque réservoir sous la forme de deux cornières 66 parallèles, disposées parallèlement aux longerons 14 du châssis, les extrémités des ailes de chaque cornière étant solidarisées au châssis par soudage et l'arête reliant les deux ailes de chaque cornière étant orientée vers le haut.

Selon une variante, le châssis comprend quatre cornières 66 qui permettent de maintenir trois réservoirs sous forme de bouteilles.

Les faces des ailes orientées vers le haut, susceptibles d'être en contact avec les bouteilles 20 comprennent avantageusement des butées à billes 68 pour faciliter le glissement des bouteilles 20 sur les cornières 66 lors de leurs mises en place ou de leurs retraits.

Pour limiter le mouvement vers l'avant des bouteilles 20 le long des cornières 26, le châssis comprend à l'avant des cornières 66 au moins une butée 70. Selon un mode de réalisation, la butée 70 se présente sous la forme d'une cornière sensiblement identique aux cornières 66, qui s'étend approximativement sur la largeur du chariot, orientée perpendiculairement aux longerons 14. Les extrémités des ailes de la cornière 70 sont solidarisées au châssis par soudage et l'arête reliant les deux ailes est orientée vers le haut. Avantageusement, la face de l'aile de la cornière 70 susceptible d'être en contact avec la ou les bouteilles comprend au moins un revêtement 72 en matériau élastique pour amortir le contact des bouteilles contre la butée 70. De préférence, ce revêtement 72 ne s'étend pas sur toute la face de la cornière mais se présente sous la forme de plaques prévues au niveau des zones de contact avec les bouteilles.

Pour limiter le mouvement vers l'arrière des bouteilles 20 le long des cornières 66, le chariot comprend à l'arrière une barre mobile 74 susceptible de venir en appui contre l'extrémité des bouteilles 20. Selon un mode de réalisation, cette barre mobile 74 comprend à chaque extrémité des montants 76 articulés par rapport à la traverse 16 arrière du châssis selon un axe de rotation 80. Des moyens de verrouillage sont prévus pour maintenir la barre mobile 74 en appui contre les bouteilles.

Les moyens pour immobiliser en translation les réservoirs 20 par rapport au chariot ne sont pas plus décrits car ils sont à la portée de l'homme du métier et peuvent prendre différentes configurations.

En complément des moyens d'immobilisation, le chariot peut comprendre des moyens pour plaquer les réservoirs 20 contre le châssis.

Selon un mode de réalisation, une barre escamotable 82 est prévue au dessus des réservoirs 20, disposée perpendiculairement aux longerons 14, sur toute la largeur du chariot, l'une des extrémités de ladite barre escamotable 82 étant montée pivotante autour d'un axe 84 horizontal parallèle aux longerons 14 prévu à l'extrémité d'un montant vertical 86 prévu sur un côté latéral du chariot, l'autre extrémité étant verrouillée ou non à l'extrémité supérieure d'un autre montant vertical 88 prévu sur l'autre côté latéral du chariot.

Ainsi dans une position de maintien, la barre escamotable 82 est disposée au dessus des réservoirs 20, sensiblement parallèle au châssis, alors que dans la position escamotée, après pivotement autour de l'axe 84, la barre est déportée par rapport au chariot et libère les réservoirs.

La barre escamotable 82 comprend de préférence au moins une vis de maintien 90 susceptible de se visser dans un écrou solidaire de ladite barre escamotable 82, la vis de maintien comportant à une première extrémité située au dessus de ladite barre 82 un bouton 92 pour la manoeuvrer et à l'autre extrémité située sous la barre 82 un patin 94 susceptible de prendre appui contre le réservoir 20. La barre escamotable 82 comprend autant de vis de maintien 90 que de réservoirs.

Avantageusement, le chariot comprend au dessus des moyens 18 pour supporter au moins un réservoir de gaz 20, un coffre de rangement 96 pour les accessoires nécessaires aux essais.

Le coffre de rangement, les moyens pour supporter les réservoirs 20 ne sont pas plus décrits car ils sont à la portée de l'homme du métier et peuvent prendre différentes configurations.

Les moyens 22 pour supporter la valise 14 prévus à l'avant du chariot peuvent se présenter sous la forme d'un caisson 98 offrant en partie supérieure une surface ou un cadre contre lequel peut prendre appui la valise. Ce caisson 98 peut être utilisé pour stocker des accessoires nécessaires aux essais. Ce caisson 98 comprend à l'avant un dégagement au niveau duquel peut se loger un enrouleur 100 sur lequel est enroulé un câble avec au niveau de son extrémité libre une pince pour le relier à une prise de terre et dont l'autre extrémité est reliée aux parties métalliques du chariot, ces dernières étant toutes reliées entre elles par des tresses métalliques pour être au même potentiel.

La valise 14 a une forme parallélépipédique avec une face avant 102, une face gauche 104, une face droite 106, une face de dessus 108, une face de dessous 110 et une face arrière 112.

La face de dessous 110 est susceptible de prendre appui contre le caisson 98. Des moyens d'immobilisation 114 sont prévus pour assujettir la valise sur le chariot, par exemple des crochets de type sauterelles prévus au niveau du caisson 98 susceptibles de coopérer avec des encoches prévues au niveau de la valise.

Toutefois, d'autres moyens pourraient être utilisés pour assujettir la valise sur le chariot.

La valise 14 comprend un capot 116 pour protéger sa face avant 102. Ce capot illustré seul sur la figure 11 comprend un fond 118 dont les dimensions correspondent à celles de la face avant 102 avec des parois latérales 120 susceptibles de coopérer avec la périphérie de la face avant 102 et de venir dans le prolongement des faces de dessus, de dessous, gauche et droite de la valise.

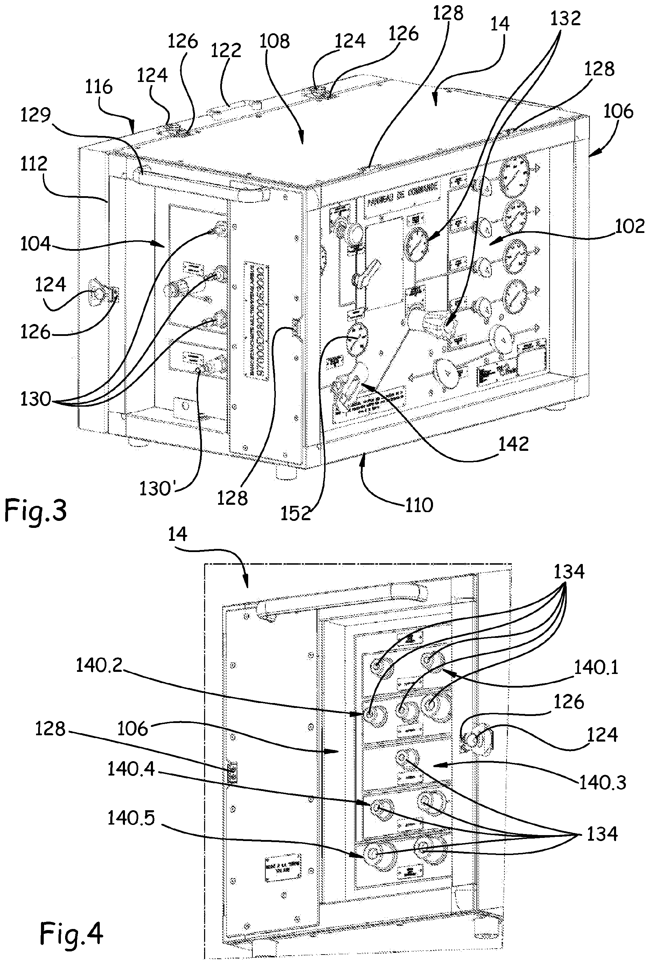

Le capot 116 comprend au niveau de la paroi latérale supérieure une poignée 122 pour le manipuler. Il comprend également au niveau des parois latérales des crochets 124 susceptibles de coopérer avec des encoches 126 (visibles sur les figures 3 et 4) prévues au niveau des faces de dessus, gauche et droite de la valise à proximité de la face avant de la valise. Avantageusement, la valise 14 comprend des encoches 128 (visibles sur les figures 3 et 4) susceptibles de coopérer avec les crochets 124 au niveau des faces de dessus, gauche et droite de la valise à proximité de la face arrière de la valise pour permettre au capot de couvrir la face avant en mode de transport et de stockage et de couvrir la face arrière de la valise en mode utilisation, comme illustré sur la figure 3.

Ce capot peut être utilisé pour stocker des accessoires comme par exemple des flexibles qui sont solidarisés de manière amovible au niveau de la face du fond orientée vers la valise.

En variante, la valise peut être dépourvue de capot ou comprendre un capot différent de celui précédemment décrit.

Pour manipuler la valise, cette dernière comprend deux poignées 129 prévues au niveau des faces gauche et droite à proximité de la face de dessus.

La valise assure la gestion des flux de gaz pour réaliser les essais sur différents réseaux fluidiques, de différents types d'aéronef.

A cet effet, la valise comprend en entrée au moins un moyen de raccordement 130 à une alimentation en gaz sous pression, des moyens 132 pour ajuster la pression du gaz et en sortie au moins deux moyens 134 de raccordement différents reliés aux moyens 132, les moyens de raccordement 134 étant adaptés chacun à une plage de pressions ou une pression donnée.

Les raccords 134 prévus en sortie sont des systèmes de connexion rapide, par exemple commercialisés par la société « Staubli », et ont des dimensions différentes en fonction de la pression du gaz circulant via le raccord.

Le fait de prévoir en sortie au moins deux raccords 134 différents, chacun adapté à une plage de pression ou à une pression donnée permet de réaliser au moins deux types de tests et par conséquent de ne pas avoir une valise adaptée pour chaque test comme pour l'art antérieur.

Le réseau fluidique comprend également un moyen de raccordement de type connexion rapide, sous forme d'un raccord dont les dimensions sont adaptées en fonction de la pression admissible dans ledit réseau fluidique.

En complément de la valise, le banc d'essai comprend au moins un flexible dit flexible d'entrée 136 pour raccorder une alimentation en gaz sous pression au moyen de raccordement 130 et au moins un flexible dit flexible de sortie 138 pour raccorder un des raccords 134 au moyen de raccordement prévu au niveau du réseau fluidique à tester.

Selon l'invention, le flexible de sortie 138 a à chaque extrémité des raccords identiques, destinés à la même pression ou à la même plage de pression. De ce fait, on limite les erreurs de branchement, l'opérateur ne peut brancher que le raccord de sortie 134 dont la pression ou la plage de pression est adaptée au circuit fluidique à tester dans la mesure où le raccord de sortie de la valise, les raccords du flexible de sortie 138 et le raccord d'entrée du circuit fluidique à tester sont tous identiques et adaptés à la même plage de pression ou à la même pression.

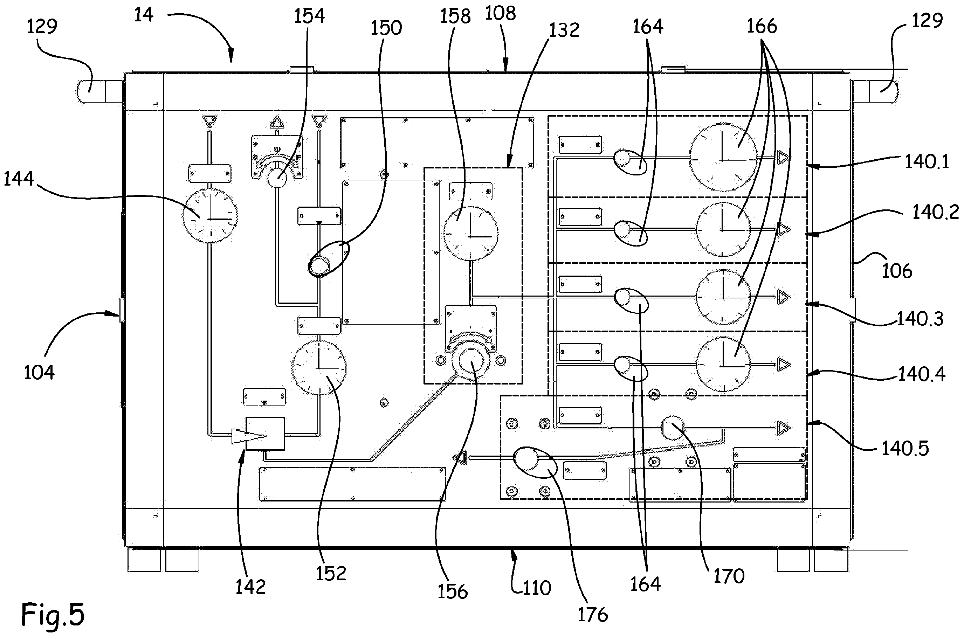

Selon l'exemple illustré sur la figure 4, la valise comprend cinq familles de raccords 140.1 à 140.5 (visible sur la figure 5), chaque famille étant destinée à une pression ou une plage de pression donnée.

A titre d'exemple, en partant du haut vers le bas, la première famille 140.1 de raccords est destinée à une pression de l'ordre de 350 mbars, la deuxième famille 140.2 de raccords est destinée à une pression de l'ordre de 700 mbars, la troisième famille 140.3 de raccords est destinée à une pression de l'ordre de 1,4 bars, la quatrième famille 140.4 de raccords est destinée à une pression de l'ordre de 2,1 bars et la cinquième famille 140.5 de raccords est destinée à une pression de l'ordre de 3,45 bars ou supérieure.

Chaque famille peut comprendre un ou plusieurs raccords. Cet agencement permet de rendre compatible la valise aux différents types d'avion (ou programmes). En effet, d'un programme à l'autre, les raccords destinés à une pression ou à une plage de pression donnée ne sont pas tous identiques.

Ces différents raccords et ces différentes familles permettent de réaliser un grand nombre de tests avec une seule valise.

En complément, comme illustré sur la figure 3, la valise comprend plusieurs moyens de raccordement 130 en entrée permettant de relier différents types d'alimentation en gaz sous pression. Ainsi, la valise comprend au moins un raccord d'entrée 130 destiné à l'air comprimé et au moins un raccord d'entrée 130' destiné à un gaz sous pression stocké en bouteille, par exemple de l'azote ou de l'hélium sous pression.

L'air comprimé peut provenir d'une installation en air comprimé généralement prévue dans les bâtiments industriels. L'hélium et l'azote sont généralement stockés dans des bouteilles susceptibles d'être rapportées sur le chariot.

Selon l'exemple illustré, la valise comprend trois raccords d'entrée 130 avec des dimensions différentes pour permettre un raccordement aux différentes installations d'air comprimé existantes et un raccord d'entrée 130' destiné à un gaz sous pression stocké en bouteille.

La valise 14 comprend également un premier ensemble de conduits permettant de relier les différents raccords d'entrée 130, 130' aux moyens 132 pour ajuster la pression du gaz et un second ensemble de conduits permettant de relier les moyens 132 pour ajuster la pression du gaz aux différents raccords de sortie 134.

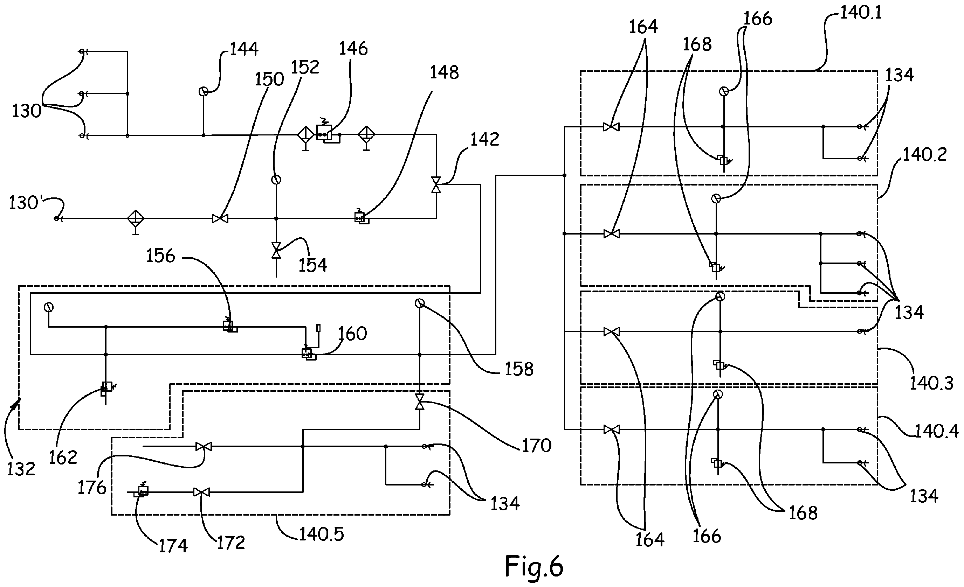

Le schéma hydraulique de la valise est représenté sur la figure 6.

On retrouve les trois raccords d'entrée 130 destinés à l'air comprimé reliés à une entrée d'une vanne trois voies 142. Entre le ou les raccords d'entrée 130 et la vanne trois voies 142, on peut prévoir un manomètre 144 visible au niveau de la face avant pour indiquer à l'opérateur la pression d'alimentation en air comprimé. On peut prévoir également un détendeur 146 pour que la pression de l'air comprimé transmis aux moyens 132 de régulation ne dépasse pas un certain seuil prédéterminé (de préférence non réglable par l'opérateur). Ce détendeur 146 peut être compris dans un ensemble filtre/détendeur.

En parallèle de l'alimentation en air comprimé, le raccord d'entrée 130' destiné aux gaz stockés en bouteille est relié à une seconde entrée de la vanne trois voies 142. La pression du gaz pouvant atteindre 200 bars alors que la pression des tests est de l'ordre de quelques bars au maximum, il convient de détendre fortement ce gaz. A cet effet, le circuit reliant le raccord d'entrée 130' et la vanne trois voies 142 comprend un détendeur 148 pour que la pression du gaz transmis aux moyens 132 de régulation ne dépasse pas un certain seuil prédéterminé. Ce détendeur 148 peut être compris dans un ensemble filtre/détendeur. Ce circuit peut comprendre également une vanne 150, ainsi qu'un manomètre 152 visible au niveau de la face avant pour indiquer à l'opérateur la pression d'alimentation en gaz sous pression. Il peut comprendre également une vanne de purge 154 dans la mesure où différents types de gaz peuvent circuler via ce circuit.

La sortie de la vanne trois voies 142 est reliée aux moyens 132 de régulation.

Ces moyens de régulation comprennent un détendeur 156 permettant d'ajuster la pression dont la commande est accessible au niveau de la face avant. Avantageusement, ils comprennent également un manomètre 158 (visible au niveau de la face avant) pour permettre de contrôler la pression réglée. Les moyens 132 de régulation peuvent comprendre des éléments de protection, tels qu'un détendeur 160 basse pression et/ou une soupape de sécurité 162.

Les moyens 132 de régulation sont reliés aux différentes familles 140.1 à 140.5 de raccords via au moins une nourrice.

Chaque famille 140.1 à 140.4 comprend une vanne 164 pour permettre le passage du gaz à la pression régulée vers le ou les raccord(s) 134 de la famille.

Entre la vanne 164 et le ou les raccord(s) 134 de la famille, on peut prévoir un manomètre 166 visible au niveau de la face avant pour indiquer à l'opérateur la pression du gaz transmis au circuit fluidique à tester.

Selon un point important de l'invention, pour au moins une famille, une soupape de sécurité 168 est prévue en amont du ou des raccord(s) 134 de sortie pour que la pression du gaz transmis au circuit fluidique à tester ne dépasse pas un certain seuil.

Ainsi, la soupape de sécurité 168 de la première famille 140.1 est calibrée pour que la pression ne dépasse pas 350 mbars, la soupape de sécurité 168 de la deuxième famille 140.2 est calibrée pour que la pression ne dépasse pas 700 mbars, la soupape de sécurité 168 de la troisième famille 140.3 est calibrée pour que la pression ne dépasse pas 1,4 bars et la soupape de sécurité 168 de la quatrième famille 140.4 est calibrée pour que la pression ne dépasse pas 2.1 bars. Cet agencement permet de limiter les risques d'endommagement du circuit fluidique à tester dans la mesure où même si les manomètres et les détendeurs sont défaillants, la pression transmise ne dépasse pas un certain seuil fonction des prescriptions de l'avionneur.

Selon un mode de réalisation, la cinquième famille peut être réalisée de même manière que les autres familles.

Avantageusement, le circuit de cette cinquième famille est différent des circuits des autres familles. Cette famille de raccords est plus particulièrement destinée aux tests utilisant l'hélium ou des pressions élevées.

Il comprend une vanne 170 pour diriger le gaz calibré par les moyens 132 de régulation en direction des raccords 134.

Comme précédemment, ce circuit comprend un système de sécurité pour que la pression transmise ne dépasse pas un certain seuil, comme par exemple une vanne 172 et une soupape 174. Toutefois, contrairement aux circuits des familles précédentes, la soupape de sécurité n'est pas disposée en série, intercalée entre la vanne 170 et le raccord 134. Pour la cinquième famille, en sortie de la vanne 170, on prévoit une nourrice qui alimente le ou les raccords 134, mais également un conduit comportant une vanne 172 et une soupape 174 en série.

Cet agencement permet lorsque la vanne 172 est ouverte de rendre active la soupape de sécurité 174 et par conséquent d'empêcher que le gaz sous pression ne dépasse une pression déterminée et calibrée par la soupape 174, de l'ordre de 3,45 bars. Lorsque la vanne 172 est fermée, il est possible de délivrer via le ou les raccords 134 de la cinquième famille un gaz sous pression qui dépasse la valeur de 3,45 bars calibrée par la soupape 174.

En complément, ce circuit comprend un système de purge 176, notamment une vanne, qui permet d'évacuer le gaz présent dans le circuit fluidique testé en un point éloigné de l'aéronef.

Selon un agencement particulier, les raccords d'entrée 130 sont disposés au niveau de la face gauche de la valise alors que les raccords de sortie 134 sont disposés au niveau de la face droite. Les différents manomètres, vannes et commandes de détendeurs sont disposés au niveau de la face avant.

Ainsi, les moyens 132 de régulation sont disposés en partie centrale, les vannes de commande et les manomètres des différentes familles étant disposées à droite alors que les vannes de commande, les manomètres de l'alimentation en gaz sont disposés à gauche.

Cet agencement des différents éléments procure une excellente ergonomie.

Pour améliorer la sécurité, les familles sont disposées les unes au dessus des autres, selon un ordre de pressions décroissantes, la pression la plus faible étant disposée en haut, au niveau des yeux de l'opérateur.

Le mode de fonctionnement est maintenant décrit :
Si nécessaire, l'opérateur met en place les bouteilles de gaz sous pression sur le chariot.

En suivant, il relie le banc d'essai à la terre grâce à l'enrouleur 100, puis il vérifie que toutes les vannes soient en position fermée au niveau de la face avant.

Pour les tests utilisant un gaz sous pression stocké dans des bouteilles, il relie la sortie de la bouteille au raccord d'entrée 130' à l'aide du flexible d'entrée 136. Pour des raisons de sécurité, il utilise un mousqueton pour relier le raccord du flexible d'entrée 136 à la valise.

Pour les tests utilisant de l'air comprimé, il est possible de connecter l'un des raccords 130 à l'aide d'un flexible à un réseau d'air comprimé généralement prévu dans les bâtiments industriels.

Il relie alors la valise et plus particulièrement un raccord de sortie 134 au circuit fluidique à tester grâce au flexible de sortie 138. Ce flexible 138 comprend une vanne et un manomètre au plus près de l'extrémité reliée au circuit à tester.

En fonction du test à réaliser, il sélectionne l'alimentation en gaz sous pression appropriée grâce à la vanne trois voies 142.

Si le gaz sous pression provient d'une bouteille, il ouvre alors la vanne 150. Il ouvre ensuite la bouteille, puis vérifie la pression affichée sur le manomètre 152. Si la pression est insuffisante pour réaliser le test, il ouvre une autre bouteille.

Si le gaz sous pression est de l'air comprimé, il passe directement à l'étape suivante.

L'opérateur ajuste alors la pression de sortie pour effectuer le test grâce à la commande du détendeur 156 et au manomètre 158.

Après ce réglage, il ouvre la vanne 164 ou 170 correspondant au raccord 134 utilisé.

Après la phase de remplissage du circuit à tester, l'opérateur peut de nouveau ajuster la pression de sortie en agissant sur la commande du détendeur 156 et en visualisant la pression réglée sur le manomètre 158.

Lorsque la valeur est atteinte, l'opérateur peut refermer la vanne 164 ou 170.

A la fin du test, l'opérateur re-ouvre la vanne 164 ou 170 concernée, puis il règle la pression du détendeur 156 à 0 Bar.

Il peut éventuellement purger le circuit testé en ouvrant les vannes 170 et 176. Cette purge est recommandée dans le cas d'un test utilisant l'hélium, pour lequel, il est préférable de rejeter l'hélium à distance de l'aéronef.

Si le test a été effectué avec une bouteille, l'opérateur ferme les bouteilles en fin de test. En suivant, il peut purger le circuit en ouvrant la vanne de purge 154. Il peut alors fermer la vanne d'alimentation 150.

Comme décrit ci-dessus, l'utilisation du banc d'essai selon l'invention est relativement simple. Sa conception et son ergonomie permettent de limiter les risques d'erreurs et d'accidents lors des phases d'essais.

Enfin, la valise permet de réaliser de nombreux tests quelque soit le type d'avions, le circuit testé et le test. Ce point permet de limiter le nombre de valises ce qui contribue à réduire les coûts et le temps nécessaires à une certification ainsi que la place nécessaire à son stockage.

## Revendications

1. Dispositif pour réaliser un test sur un réseau fluidique d'un aéronef comportant une valise (14) comprenant en entrée au moins un moyen de raccordement (130) à une alimentation en gaz sous pression relié à des moyens (132) pour ajuster la pression du gaz fourni par l'alimentation en fonction du test à réaliser, au moins deux raccords de sortie (134) ayant des dimensions différentes adaptées à une plage de pressions ou une pression donnée, chaque raccord de sortie (134) étant adapté à la même plage de pression ou à la même pression donnée que le réseau fluidique à tester auquel il est susceptible d'être raccordé et en ce que le dispositif comprend au moins un flexible dit de sortie (138) pour raccorder un des raccords de sortie (134) au moyen de raccordement prévu au niveau du réseau fluidique à tester, **caractérisé en ce que** ledit flexible de sortie (138) ayant à chaque extrémité des raccords identiques entre eux et identiques aux raccords de sortie (134) de la valise et au moyen de raccordement prévu au niveau du circuit fluidique à tester et **en ce que** la valise comprend plusieurs familles (140.1 à 140.5) de raccords de sortie (134), chaque famille étant destinée à une plage de pression ou une pression donnée, pour au moins une famille (140.1 à 140.4), une soupape de sécurité (168) étant intercalée en amont entre une vanne de commande (164) et le ou les moyen(s) de raccordement de la famille considérée (140.1 à 140.4), pour au moins une famille (140.5), une soupape de sécurité (174) étant disposée en série avec une vanne (172) connectée en sortie d'une vanne de commande (170) dont la sortie est également reliée au(x) moyen(s) de raccordement de la famille considérée (140.5).

2. Dispositif selon la revendication 1, **caractérisé en ce que** la valise comprend plusieurs moyens de raccordement (130) à une alimentation, au moins un raccord d'entrée (130) destiné à l'air comprimé et au moins un raccord d'entrée (130') destiné à un gaz sous pression stocké en bouteille.

3. Dispositif selon la revendication 2, **caractérisé en ce que** la valise (14) comprend une vanne trois voies (142) pour sélectionner les moyens de raccordement d'entrée (130, 130') à relier aux moyens (132) de régulation.

4. Dispositif selon la revendication 3, **caractérisé en ce que** la valise (14) comprend un détendeur (148) intercalé entre le raccord d'entrée (130') destiné à un gaz sous pression stocké en bouteille et la vanne trois voies (142).

## Patentansprüche

1. Vorrichtung zum Testen einer Fluidschaltung eines Luftfahrzeugs, die einen Koffer (14) aufweist, mit eingangsseitig wenigstens einem Mittel (130) zum Anschluss an eine Versorgung mit Druckgas, das mit Mitteln (132) verbunden ist, um den Druck des von der Versorgung gelieferten Gases in Abhängigkeit vom auszuführenden Test einzustellen, mit wenigstens zwei Ausgangsanschlüssen (134), die unterschiedliche Abmessungen haben, die für einen Druckbereich oder einen bestimmten Druck eingerichtet sind, wobei jeder Ausgangsanschluss (134) für den gleichen Druckbereich oder den gleichen bestimmten Druck wie die zu testende Fluidschaltung eingerichtet ist, an die dieser angeschlossen werden kann, und dass die Vorrichtung wenigstens einen Ausgangsschlauch (138) aufweist, um einen der Ausgangsanschlüsse (134) mit dem im Bereich der zu testenden Fluidschaltung vorgesehenen Anschlussmittel zu verbinden, **dadurch gekennzeichnet, dass** der Ausgangsschlauch (138) an jedem Ende untereinander und zu den Ausgangsanschlüssen (134) des Koffers und zu den im Bereich der zu testenden Fluidschaltung vorgesehenen Anschlussmitteln identische Anschlüsse aufweist und dass der Koffer mehrere Gruppen (140.1 bis 140.5) von Ausgangsanschlüssen (134) aufweist, wobei jede Gruppe für einen Druckbereich oder einen bestimmten Druck vorgesehen ist und wobei in wenigstens einer Gruppe (140.1 bis 140.4) ein Sicherheitsventil (168) zwischen einem Steuerventil (164) und dem oder den Anschlussmittel(n) der jeweiligen Gruppe (140.1 bis 140.4) querab zwischengeschaltet ist und wobei in wenigstens einer Gruppe (140.5) ein Sicherheitsventil (174) in Reihe zu einem Ventil (172) angeordnet ist, das mit dem Ausgang eines Steuerventils (170) verbunden ist, dessen Ausgang ebenfalls mit dem(den) Verbindungsmittel(n) der jeweiligen Familie (140.5) verbunden ist.

2. Vorrichtung nach Anspruch 1, **dadurch gekennzeichnet, dass** der Koffer mehrere Mittel (130) zum Anschluss an die Versorgung aufweist, wenigstens einen Eingangsanschluss (130), der für Druckluft vorgesehen ist, und wenigstens einen Eingangsanschluss (130'), der für ein in Flaschen aufbewahrtes Druckgas vorgesehen ist.

3. Vorrichtung nach Anspruch 2, **dadurch gekennzeichnet, dass** der Koffer (14) ein Dreiwegeventil (142) aufweist, um die eingangsseitigen Anschlussmittel (130, 130') mit den Steuermitteln (132) zu verbinden.

4. Vorrichtung nach Anspruch 3, **dadurch gekennzeichnet, dass** der Koffer (14) einen Druckminderer (148) aufweist, der zwischen dem Eingangsanschluss (130'), der für das in Flaschen aufbewahrte Druckgas vorgesehen ist, und dem Dreiwegeventil (142) zwischengeschaltet ist.

## Claims

1. Device for carrying out a test on a fluid circuit of an aircraft comprising a test unit (14) which comprises, at the inlet, at least one means of connection (130) to a pressurized gas supply connected to means (132) for regulating the pressure of the gas provided by the supply as a function of the test to be carried out, at least two outlet connections (134) having different dimensions tailored to a range of pressures or a given pressure, each outlet connection (134) being adapted to the same range pressure or the same given pressure of the fluid circuit to be tested to which it is likely to be connected and said device comprising at least one hose referred to as an outlet hose (138) to connect one of the outlet connections (134) to a connection means provided in the area of the fluid circuit to be tested, **characterized in that** said outlet hose (138) having, at each end, connectors that are identical to one another and identical to the outlet connections (134) of the test unit and to the connection means provided in the area of the fluid circuit to be tested and **in that** the test unit comprises several families (140.1 à 140.5) of outlet connections (134), each family being adapted to a pressure range or a given pressure, for at least one family (140.1 à 140.4), a safety valve (168) is sandwiched upstream between a control valve (164) and one or more of the outlet connections of the considered family (140.1 à 140.2), for at least one family (140.5), a safety valve (174) being arranged in series with a valve (172) connected at the outlet of a control valve (170), the outlet of which is also connected to one or more of the outlet connections of the considered family (140.5).

2. Device according to claim 1, **characterized in that** the test unit comprises several means (130) of connection to a supply, at least one inlet connector (130) adapted to compressed air and at least one inlet connector (130') adapted to a pressurized gas stored in a bottle.

3. Device according to claims 2, **characterized in that** the test unit (14) comprises a three-way valve (142) to select the inlet connection means (130, 130') for connecting to the regulation means (132).

4. Device according to claim 3, **characterized in that** the test unit (14) comprises a pressure-reducing valve (148) sandwiched between the inlet connector (130') adapted to a pressurized gas stored in a bottle and the three-way valve (142).
